# EUROPEAN PATENT APPLICATION

(11) **EP 4 653 241 A1**
(43) Date of publication of application: **26.11.2025**
(21) Application number: 23917661.3
(22) Date of filing: 30.11.2023
(51) Int. Cl.: B60L 9/30, B60L 13/00

(54) **ELECTRIC VEHICLE**

(30) Priority: 20.01.2023 JP 2023007681
(71) Applicant: Toyo Electric MFG. Co., Ltd., Tokyo 103-0028 (JP)
(72) Inventor: FUJIMOTO, Kazuki, Tokyo 103-0028 (JP); MATSUMOTO, Tetsuya, Tokyo 103-0028 (JP)
(74) Representative: Mathys & Squire
(86) International application number: PCT/JP2023/042959
(87) International publication number: WO 2024/154449

(57) **Abstract**

An electric vehicle (1) includes a current collector (2), one or more charging devices (3) charged by an auxiliary power supply device (4) connected to the current collector (2), a propulsion inverter (5) that drives a main electric motor (9), and a switch (61) that switches the connection between the one or more charging devices (3) and the propulsion inverter (5) from off to on when the current collector (2) is disconnected from a power supply.

## Description

### CROSS-REFERENCE TO RELATED APPLICATION

The present application claims priority to Japanese Patent Application No. 2023-007681 filed on January 20, 2023, the entire contents of which are incorporated herein by reference.

### TECHNICAL FIELD

The present disclosure relates to an electric vehicle that can run when the power supply is cut off.

### BACKGROUND

Electric railroad vehicles generally run on power supplied from overhead lines or a third rail. If a problem occurs with the overhead lines or substation that supplies the power, the railroad vehicle will usually be unable to run. In particular, when a vehicle stops at a dangerous point where passengers cannot disembark, such as a bridge during a large-scale disaster, it is necessary to move the vehicle slightly in some way so that the passengers can disembark and evacuate at a relatively safe location.

For this reason, vehicles are commonly equipped with a storage battery connected to the main circuit system and a charging/discharging system for the storage battery. Patent Literature (PTL) 1 attempts to solve the above problem by installing a large-scale storage battery in the DC section.

### CITATION LIST

### Patent Literature

PTL 1: JP 5161816 B2

### SUMMARY

### (Technical Problem)

However, the common method of using a large-scale, high-capacity storage battery and applying the rated voltage to the system in an emergency results in a system that is excessively large for the purpose of emergency running, and the cost of installing such a system in all the vehicles would be problematic.

It is an aim of the present disclosure, made in view of these circumstances, to provide an electric vehicle capable of switching modes in an emergency, without the need to install a large-scale energy storage system.

### (Solution to Problem)

An electric vehicle system according to an embodiment includes a current collector, one or more charging devices charged by an auxiliary power supply device connected to the current collector, a propulsion inverter configured to drive a main electric motor, and a switch configured to switch a connection between the one or more charging devices and the propulsion inverter from off to on when the current collector is disconnected from a power supply.

Furthermore, in an embodiment, a total voltage of the one or more charging devices may be 10 % or more and 20 % or less of a voltage of the power supply.

Furthermore, an embodiment may further include a current collection detector configured to detect a state of connection between the current collector and an overhead line mechanically and output a signal indicating a detection result.

Furthermore, in an embodiment, the switch may be configured to switch the connection between the one or more charging devices and the propulsion inverter from off to on in a case in which the current collection detector outputs a signal indicating that the current collector has been disconnected from the overhead line, capacitors of the auxiliary power supply device and the propulsion inverter have completed discharging, and no current is flowing in the auxiliary power supply device and the propulsion inverter.

### (Advantageous Effect)

According to the present disclosure, modes can be switched in an emergency, without the need to install a large-scale energy storage system.

### BRIEF DESCRIPTION OF THE DRAWINGS

In the accompanying drawings:
FIG. 1 is a configuration diagram illustrating an example electric vehicle according to an embodiment of the present disclosure; and
FIG. 2 is a simplified circuit diagram of an electric vehicle according to an embodiment of the present disclosure.

### DETAILED DESCRIPTION

Embodiments are described below in detail with reference to the drawings.

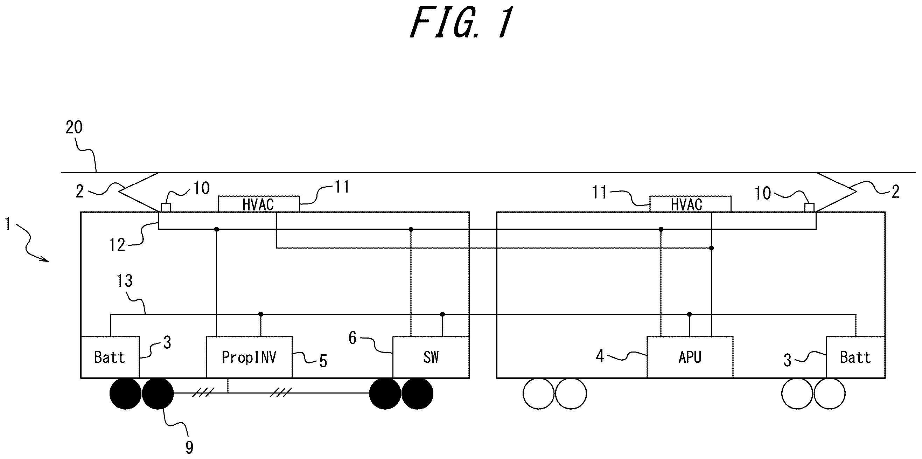

FIG. 1 is a configuration diagram illustrating an example electric vehicle according to an embodiment. The electric vehicle 1 illustrated in FIG. 1 includes a current collector 2, one or more charging devices (second power supply, Batt) 3, an auxiliary power supply device (APU) 4, a propulsion inverter (PropINV) 5, a changeover switch box (SW) 6, a main electric motor 9, a current collection detector 10, an air conditioning unit (HVAC) 11, a high-voltage power supply line 12, and an in-vehicle control power line 13.

The current collector 2 collects electricity from an overhead line (first power supply) 20 and supplies the electricity to the propulsion inverter 5, the auxiliary power supply device 4, and the changeover switch box 6 via the high-voltage power supply line 12. In the present embodiment illustrated in FIG. 1, an overhead train line system (overhead line current collection system) in which current is collected from the overhead line 20 using a pantograph as the current collector 2 is illustrated, but the present disclosure can also be applied to a third rail system in which current is collected from a third rail (first power supply) using a current collection shoe as the current collector 2.

The propulsion inverter 5 supplies electricity to the main electric motor 9 for driving (running) the vehicle, thereby driving the main electric motor 9. In the present embodiment, three-phase AC power is supplied to the main electric motor 9 for convenience, but the main electric motor 9 may be a DC electric motor.

The auxiliary power supply device 4 is a power converter connected to the current collector 2. The auxiliary power supply device 4 supplies electricity via the in-vehicle control power line 13 to the charging device 3 (second power supply), a control power supply for the propulsion inverter 5, a control power supply for the auxiliary power supply device 4, the air conditioning unit 11, and the changeover switch box 6.

The charging device 3 is a small-capacity control battery and is charged by the auxiliary power supply device 4.

The current collection detector 10 mechanically detects the state of connection between the current collector 2 and the overhead line 20 to detect whether the current collector 2 is receiving power supply, and outputs a signal indicating the detection result. For example, in a case in which the current collector 2 is a pantograph, the current collector 2 is normally folded and not connected to the overhead line 20 when the vehicle power is turned on, and the current collection detector 10 outputs a contact signal indicating "not raised".

The changeover switch box 6 includes a switch 61, such as a mechanical switch or a semiconductor switch, for changing over the current. The switch 61 switches the connection between any charging device 3 and the propulsion inverter 5 from off to on when the current collector 2 is disconnected from the overhead line 20 and the current consumption of the current collector 2 is equal to or less than a threshold.

The voltage of the charging device 3 is generally rated at 100 V to 110 V DC, or at 24 V, 36 V, or 48 V DC. The voltage of the overhead line 20 is generally 600 V, 750 V, 1500 V, or 3000 V DC. In the case of 24 V, 36 V, or 48 V DC, the voltage is low compared to the original rated voltage, and the main electric motor 9 does not output the torque required to drive the electric vehicle 1. In order to drive the electric vehicle 1, it is considered that the total voltage of the charging devices 3 needs to be 10 % or more of the voltage of the overhead line 20. Therefore, if the voltage of one charging device 3 when fully charged is less than 10 % of the voltage of the overhead line 20, it is necessary to provide a plurality of charging devices 3. However, to achieve the aim of slightly moving the vehicle to a safe location in the event of an emergency, a voltage exceeding 20 % of the voltage of the overhead line 20 is considered unnecessary. Therefore, the total voltage of the charging devices 3 is preferably 10 % or more and 20 % or less of the voltage of the overhead line 20.

### <Normal mode and emergency running mode>

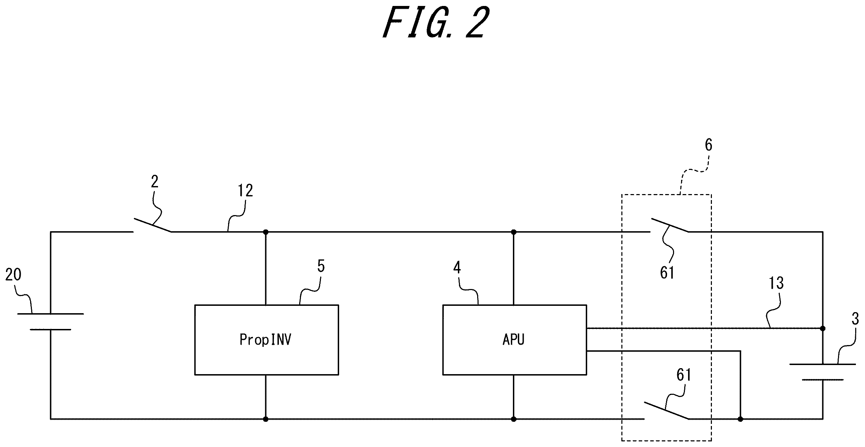

Next, with reference to FIG. 2, the switching between a normal mode and an emergency running mode is explained. FIG. 2 is a simplified circuit diagram of the electric vehicle 1.

In the normal mode, the main electric motor 9 is driven by the power supplied from the current collector 2. Furthermore, the auxiliary power supply device 4 operates using the power supplied from the current collector 2. The auxiliary power supply device 4 supplies power to auxiliary equipment such as the air conditioning unit 11, to interior lights, to compressors, and the like. The auxiliary power supply device 4 also charges the charging device 3 and supplies power to the control power supply for the propulsion inverter 5 via the in-vehicle control power line 13.

When the power supply from the overhead line 20 is cut off, the normal mode transitions to the emergency running mode. At this time, it is necessary to ensure that the current collector 2 is separated from the overhead line 20 before the potentials of the in-vehicle control power line 13 and the high-voltage power supply line 12 become the same.

A mode switching command is therefore first set from within the vehicle. The electric vehicle 1 then performs the following operations (1), (2), and (3) simultaneously.
(1) The current collector 2 is lowered and disconnected from the overhead line 20. Once the current collector 2 is lowered, the current collection detector 10 outputs a signal indicating that the current collector 2 has been disconnected from the overhead line 20 (a signal indicating that the current collector 2 is not raised).
(2) The auxiliary power supply device 4 and the propulsion inverter 5 open the contactors inside the auxiliary power supply device 4 and the propulsion inverter 5 and discharge the electric charge stored in the capacitors inside the auxiliary power supply device 4 and the propulsion inverter 5. This operation can eliminate the effect of the charge stored in the capacitors.
(3) A control circuit detects that the current values of the propulsion inverter 5 and the auxiliary power supply device 4 are zero.

The control circuit of the electric vehicle 1 switches both of two sets of switches 61 in the changeover switch box 6 from off to on after confirming the above three conditions, i.e., that (1) the current collection detector 10 has outputted a signal indicating that the current collector 2 is disconnected from the overhead line 20, (2) the capacitors of the auxiliary power supply device 4 and the propulsion inverter 5 have completed discharging, and (3) no current is flowing in the auxiliary power supply device 4 and the propulsion inverter 5. This switches the mode from the normal mode to the emergency running mode.

At this time, the current collector 2 is disconnected from the overhead line 20. Therefore, the potentials of the in-vehicle control power line 13 and the high-voltage power supply line 12 are the same, and power can be supplied from the charging device 3 to the propulsion inverter 5.

In the emergency running mode, the propulsion inverter 5 starts operating and begins supplying power to the main electric motor 9. This enables the electric vehicle 1 according to the present disclosure to switch to running via the charging device 3, which is the second power supply, even in an emergency when the power supply from the first power supply for normal power consumption is cut off. Furthermore, the system of the electric vehicle 1 can be constructed by increasing the number of small-scale, low-capacity low-voltage storage batteries installed in existing equipment. Since large-scale, high-capacity storage batteries are not necessary for simply moving the vehicle, the system can be implemented at low cost and in a compact size.

The above embodiments have been described as representative examples, but it will be apparent to one of ordinary skill in the art that numerous modifications and replacements may be made within the spirit and scope of the present disclosure. Therefore, the present disclosure should not be interpreted as being restricted to the above embodiments. A variety of changes or modifications may be made without departing from the scope of the claims. For example, a plurality of the configuration blocks indicated in the diagrams of the embodiments may be integrated, or one configuration block may be divided into multiple parts.

### REFERENCE SIGNS LIST

- 1: Electric vehicle
- 2: Current collector
- 3: Charging device
- 4: Auxiliary power supply device
- 5: Propulsion inverter
- 6: Changeover switch box
- 9: Main electric motor
- 10: Current collection detector
- 11: Air conditioning unit
- 12: High-voltage power supply line
- 13: In-vehicle control power line
- 20: Overhead line
- 61: Switch

## Claims

1. An electric vehicle comprising:
a current collector;
one or more charging devices charged by an auxiliary power supply device connected to the current collector;
a propulsion inverter configured to drive a main electric motor; and
a switch configured to switch a connection between the one or more charging devices and the propulsion inverter from off to on when the current collector is disconnected from a power supply.

2. The electric vehicle according to claim 1, wherein a total voltage of the one or more charging devices is 10 % or more and 20 % or less of a voltage of the power supply.

3. The electric vehicle according to claim 1 or 2, further comprising a current collection detector configured to detect a state of connection between the current collector and an overhead line mechanically and output a signal indicating a detection result.

4. The electric vehicle according to claim 3, wherein the switch is configured to switch the connection between the one or more charging devices and the propulsion inverter from off to on in a case in which the current collection detector outputs a signal indicating that the current collector has been disconnected from the overhead line, capacitors of the auxiliary power supply device and the propulsion inverter have completed discharging, and no current is flowing in the auxiliary power supply device and the propulsion inverter.
